# EUROPÄISCHE PATENTSCHRIFT

(11) **EP 0 534 111 B1**
(45) Veröffentlichungstag und Bekanntmachung des Hinweises auf die Patenterteilung: **07.10.1998**
(21) Anmeldenummer: 92113653.7
(22) Anmeldetag: 11.08.1992
(51) Int. Cl.: F16K 7/17, F16K 27/02

(54) **Membranventil aus Kunststoff und dessen Verwendung**
Plastic diaphragm valve and its use
Robinet à membrane en plastique et son utilisation

(30) Priorität: 13.09.1991 CH 2716/91
(43) Veröffentlichungstag der Anmeldung: 31.03.1993
(73) Patentinhaber: Georg Fischer Rohrleitungssysteme AG, CH-8201 Schaffhausen (CH)
(72) Erfinder: Schalk, Adelbert, Dipl.-Ing., W-7896 Wut-Horheim (DE)
(74) Vertreter: Rottmann, Maximilian R.

(56) Entgegenhaltungen:
- EP-A- 185 428
- GB-A- 2 068 070
- US-A- 4 454 893
- DURAPIPE: POLYETHYLENE PIPEWORK SYSTEMS (FIRMENPROSPEKT), 7. März 1991, Durapipe Glynwed Plastics Ltd, Northon Canes, Cannock, Staffordshire, GB
- DURAPIPE: THERMOPLASTIC VALVES (FIRMENPROSPEKT), 4. Oktober 1989, Durapipe Glynwed Plastics Ltd, Northon Canes, Staffordshire, GB

## Beschreibung

Die Erfindung betriftt ein Membranventil aus Kunststoff, wie es im Oberbegriff von Anspruch 1 beschrieben ist.

Versorgungsleitung aus Kunststoff für die Zuführung von Trinkwasser und Gas bestehen meist aus einem schweissbaren Kunststoff, vorzugsweise aus Polyethylen. Für die Absperrrung der Leitungen vor dem Hausanschluss werden Schieber verwendet, die mit einer meist in die Strassenoberfläche eingebauten Kupplung über ein Gestänge zu betätigen sind.

Bekannt sind Membranventile, welche einen durch ein Druckmedium betätigbaren Stellantrieb aufweisen und somit fernbedienbar sind. Diese bekannten Ventile sind durch die verwendeten Materalien wie z.B. Polyvinylchlorid nur im Industrie-Bereich verwendbar und somit nicht für den Einsatz im Versorungsbereich geeignet, da sie für die hier übliche direkte Verbindungstechnik mittels Schweissmuffen ungeeignet sind.

Aus US-A-4 454 893 ist ein als Exhalationsventil für ein Beatmungsgerät ausgestaltetes Membranventil bekannt, dessen Gehäuseunterteil zum Anschluss an Schlauch- bzw. Rohrleitungen vorgesehen ist.

Im Firmenprospekt "Polyethylen Pipework Systems", 07.03.91, Durapipe Glynwed Plastics Ltd; Northon Canes, Cannock, Staffordshire, GB, Seiten 8-11 und 44 sind Membranventile mit einem Gehäuseunterteil aus einem schweissbaren thermoplastischen Kunststoff zum Verbinden mit Versorgungsleitungen für Gas offenbart.

Aufgabe der vorliegenden Erfindung ist die Schaffung eines Membranventils der eingangs genannten Art, welches einen direkten Anschluss für das Durchflussmedium mittels Schweissverbindungen an das Rohrleitungsnetz der Wasser- oder Gas-Versorgung ermöglicht, wobei auch der Anschluss der Steuerleitung beim Stellantrieb des Ventils ebenfalls auf die gleiche Art herstellbar sein soll.

Erfindungsgemäss wird diese Aufgabe durch die kennzeichnenden Merkmale des Anspruches 1 gelöst.

Besonders vorteilhafte Ausbildungen der Erfindung sind in den abhängigen Ansprüchen gekennzeichnet.

Die Erfindung ist in der beiliegenden Zeichnung beispielsweise dargestellt und nachfolgend beschrieben. Es zeigen:
- Fig. 1: eine Seitenansicht eines Membranventils teilweise im Schnitt und
- Fig. 2: den Einbau eines Membranventils in einer Versorgungsleitung.

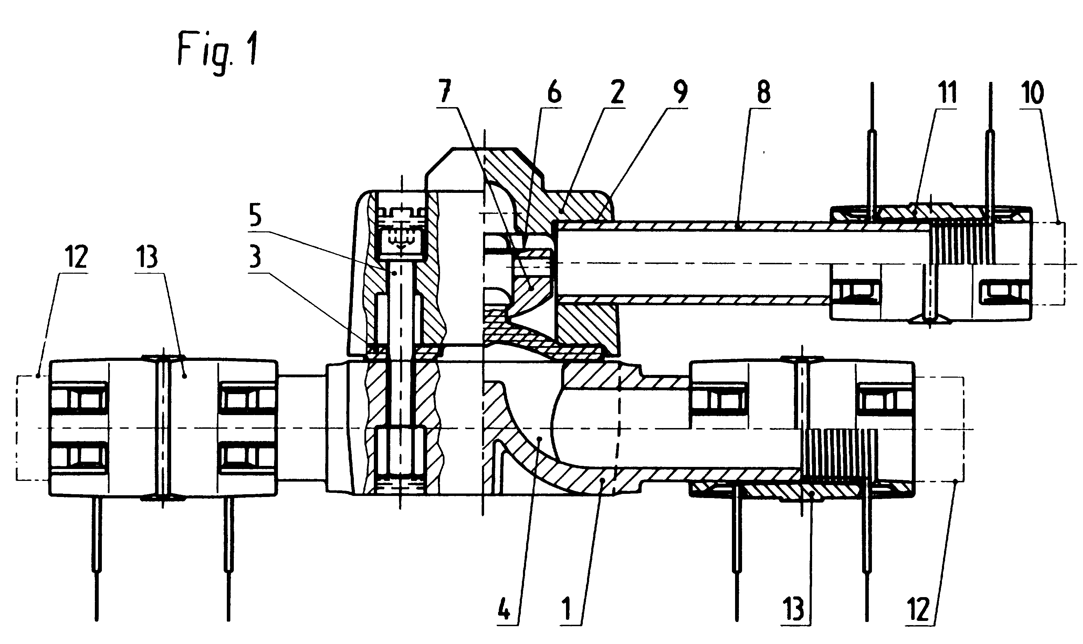

Das in Fig. 1 gezeigte Membranventil weist ein Gehäuseunterteil 1 mit einem Medium-Durchflusskanal 4 und ein Gehäuseoberteil 2 auf. Beide Gehäuseteile 1, 2 sind aus einem schweissbaren Kunststoff wie z.B. Polyethylen hergestellt und mittels Schraubverbindungen 5 miteinander verbunden, wobei eine Membrane 3 aus einem Elastomer zwischen den beiden Gehäuseteilen 1, 2 fest eingespannt angeordent ist.

Zur Betätigung der Membrane 3 ist im Gehäuseoberteil 2 ein mit einem Druckmedium betätigbarer Stellantrieb 6 angeordnet, wobei die Membrane 3 fest mit einem Druckstück 7 des Stellantriebes 6 verbunden ist. Vorzugsweise ist das Druckmedium Druckluft.

Das Druckstück 7 ist im Gehäuseoberteil 2 in Längsrichtung verschiebbar geführt und gegen Verdrehen gesichert.

Für die Zuführung des Druckmediums ist am Gehäuseoberteil 2 ein Rohrstutzen 8 angeordnet, welcher in einer Bohrung 9 steckend durch eine Schweissung fest mit dem Gehäuseoberteil 2 verbunden ist.

Zur Herstellung dieser Muffen-Schweissung muss der Rohrstutzen 8 ebenfalls aus dem gleichen schweissbaren thermoplastischen Materialtyp wie das Gehäuseoberteil 2 bestehen, wobei hierfür vorzugsweise Polyethylen verwendet wird.

Anstatt der Muffen-Schweissung kann der Rohrstutzen 8 auch durch eine stirnseitige Stumpf-Schweissung mit dem Gehäuseoberteil 2 verbunden werden oder es besteht auch die Möglichkeit, dass der Rohrstutzen 8 mit dem Gehäuseoberteil 2 durch einstückige Herstellung im Spritzgussverfahren fest verbunden ist.

Durch die Verwendung von Rohren aus einem schweissbaren Thermoplast, wie z.B. aus Polyethylen kann dann auch zum Anschliessen des Membranventils an ein Zufuhrrohr 10 für das Druckmedium zur Steuerung des Ventils eine Elektro-Schweissmuffe 11 verwendet werden, wodurch eine einfache und sichere Verbindungstechnik angewendet werden kann.

Das gleiche gilt für den Anschluss des Gehäuseunterteils 1 des Membranventils an die Rohrleitung 12 für das Durchflussmedium, wofür vorteilhafterweise ebenfalls Elektro-Schweissmuffen 13 verwendet werden.

Da das Membranventil hauptsächlich für Trinkwasserleitungen oder Gasleitungen verwendet wird, sind nicht die hohen Schliesskräfte wie bei Membranventilen für die industrielle Verwendung erforderlich, sodass eine Verwendung von Polyethylen für das Gehäuseoberteil 2 und das Gehäuseunterteil 1 möglich ist, wobei auch ein ande-rer schweissbarer Kunststoff verwendet werden kann, welcher in der Gas- und Wasserversorgung üblicherweise Verwendung findet.

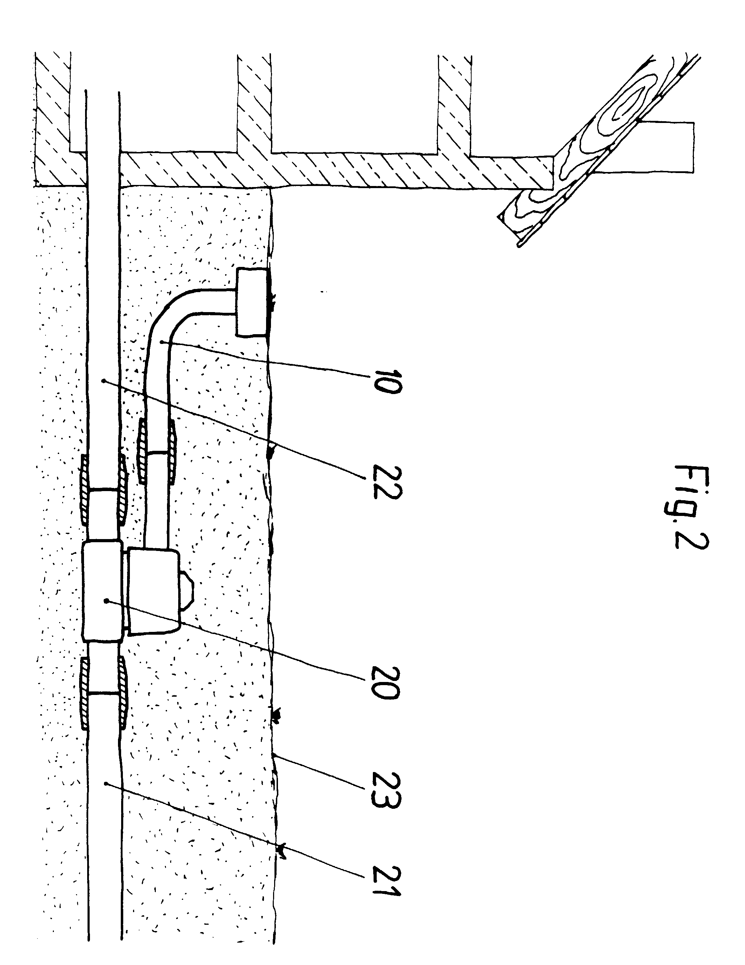

Figur 2 zeigt die Verwendung eines vorgängig beschriebenen Membranventils 20 in Versorgungsleitungen 21 für Trinkwasser oder Gas zur Absperrung einer Hauszufuhrleitung 22.

Von dem unter der Erdoberfläche 23 angeordneten Membranventil 20 führt das Zufuhrrohr 10 für das Druckmedium zur Erdoberfläche 23 und ist dort jederzeit zugänglich. Zum Absperren der Hauszufuhrleitung 22 wird an das zugängliche Ende des Zufuhrrohres 10 eine Druckluftflasche angeschlossen, wobei durch die Druckluft der Stellantrieb betätigbar ist und der Durchfluss geschlossen werden kann.

Durch die verwendeten Materalien und die Anwendung der Schweiss-Verbindungstechnik ist eine einfache und kostengünstige Herstellung des Membranventils sowie dessen Verwendung in Versorungsleitungen gegeben.

## Patentansprüche

1. Membranventil aus Kunststoff zur Absperrung einer Hauszufuhrleitung (22) bei Versorgungsleitungen (21) für Trinkwasser und Gas, mit einem Gehäuseunterteil (1) aus einem schweissbaren thermoplastischen Kunststoff zum Verschweissen mit den Rohrleitungen (12,21,22), einem Gehäuseoberteil (2) mit einem durch ein Druckmedium beaufschlagbaren Stellantrieb (6) und einer zwischen den Gehäuseteilen eingespannten Membrane (3), dadurch gekennzeichnet, dass das Gehäuseunterteil (1) und das Gehäuseoberteil (2) aus demselben schweissbaren thermoplastischen Kunststoff bestehen, und dass ein Rohrstutzen (8) für das Druckmedium aus einem schweissbaren thermoplastischen Kunststoff mit dem Gehäuseoberteil (2) verbunden ist.

2. Membranventil nach Anspruch 1, dadurch gekennzeichnet, dass das Gehäuseunterteil (1), das Gehäuseoberteil (2) und der Rohrstutzen (8) aus Polyethylen hergestellt sind.

3. Membranventil nach Anspruch 1 oder 2, dadurch gekennzeichnet, dass der Rohrstutzen (8) mittels einer Schweissverbindung mit dem Gehäuseoberteil (2) verbunden ist.

4. Membranventil nach Anspruch 3, dadurch gekennzeichnet, dass der Rohrstutzen (8) in einer Bohrung (9) des Gehäuseoberteils (2) steckend durch eine Muffenschweissung mit dem Gehäuseoberteil (2) verbunden ist.

5. Membranventil nach Anspruch 3, dadurch gekennzeichnet, dass der Rohrstutzen (8) stirnseitig mittels einer Stumpfschweissverbindung mit dem Gehäuseoberteil (2) verbunden ist.

6. Membranventil nach Anspruch 1 oder 2, dadurch gekennzeichnet, dass der Rohrstutzen (8) mit dem Gehäuseoberteil (2) durch einstückige Herstellung im Spritzgussverfahren fest verbunden ist.

7. Membranventil nach einem der Ansprüche 1 bis 6, dadurch gekennzeichnet, das das Gehäuseunterteil (1) mit der Rohrleitung (12) für das Durchflussmedium mittels Elektro-Schweissmuffen (13) fest verbindbar ist.

8. Membranventil nach einem der Ansprüche 1 bis 7, dadurch gekennzeichnet, dass der Rohrstutzen (8) des Gehäuseoberteils (2) mit einem Zufuhrrohr (10) für das Druckmedium mittels einer Elektro-Schweissmuffe (11) fest verbindbar ist.

9. Anordnung des Membranventils nach einem der Ansprüche 1 bis 8, dadurch gekennzeichnet, dass von einem unter der Erdoberfläche angeordneten Membranventil (20) ein Zufuhrrohr (10) für das Druckmedium bis zur Erdoberfläche verlegt und an seinem Ende eine Druckluftflasche zur Absperrung des Membranventils (20) anschliessbar ist.

## Claims

1. Diaphragm valve of plastics material for sealing off a house supply main (22) in supply lines (21) for drinking water and gas, having a lower housing portion (1) of a weldable thermoplastic plastics material for welding to the pipe lines (12, 21, 22), an upper housing portion (2) with an actuator (6) which can be acted on by a pressure medium, and a diaphragm (3) clamped between the housing portions, characterised in that the lower housing portion (1) and the upper housing portion (2) are made of the same weldable thermoplastic plastics material, and in that a pipe connection piece (8) for the pressure medium, made of a weldable thermoplastic plastics material, is joined to the upper housing portion (2).

2. Diaphragm valve according to claim 1, characterised in that the lower housing portion (1), the upper housing portion (2) and the pipe connection piece (8) are made of polyethylene.

3. Diaphragm valve according to claim 1 or 2, characterised in that the pipe connection piece (8) is joined by means of a weld connection to the upper housing portion (2).

4. Diaphragm valve according to claim 3, characterised in that the pipe connection piece (8) is plugged into a bore (9) of the upper housing portion (2) and joined by means of a sleeve weld to the upper housing portion (2).

5. Diaphragm valve according to claim 3, characterised in that the pipe connection piece (8) is joined at its end to the upper housing portion (2) by means of a butt weld connection.

6. Diaphragm valve according to claim 1 or 2, characterised in that the pipe connection piece (8) is fixedly connected to the upper housing portion (2) by a one-piece production in the injection moulding process.

7. Diaphragm valve according to one of claims 1 to 6, characterised in that the lower housing portion (1) can be fixedly connected to the pipe line (12) for the throughflow medium by means of electro-welding sleeves (13).

8. Diaphragm valve according to one of claims 1 to 7, characterised in that the pipe connection piece (8) of the upper housing portion (2) can be fixedly connected to a supply pipe (10) for the pressure medium by means of an electro-welding sleeve (11).

9. Arrangement of the diaphragm valve according to one of claims 1 to 8, characterised in that a supply pipe (10) for the pressure medium is laid from a diaphragm valve (20) arranged below the earth's surface up to the earth's surface, and at its end a compressed air bottle for blocking the diaphragm valve (20) can be connected.

## Revendications

1. Robinet à membrane en matière plastique, destiné à la fermeture d'une conduite d'amenée domestique (22) au niveau de conduites d'alimentation (31) en eau potable et en gaz, avec une partie inférieure de corps (1) en une matière thermoplastique soudable, devant être soudée aux tuyauteries (12, 21, 22), une partie supérieure de corps (2) comportant un entraînement de réglage (6) pouvant être sollicité par un fluide sous pression et une membrane (3) enserrée entre les parties de corps, caractérisé en ce que la partie inférieure de corps (1) et la partie supérieure de corps (2) sont constituées de la même matière thermoplastique soudable, et en ce qu'une tubulure (8) destinée au fluide sous pression, constituée d'une matière thermoplastique soudable, est reliée à la partie supérieure de corps (2).

2. Robinet à membrane selon la revendication 1, caractérisé en ce que la partie inférieure de corps (1), la partie supérieure de corps (2) et la tubulure (8) sont fabriquées en polyéthylène.

3. Robinet à membrane selon la revendication 1 ou 2, caractérisé en ce que la tubulure (8) est reliée à la partie supérieure de corps (2) au moyen d'une liaison soudée.

4. Robinet à membrane selon la revendication 3, caractérisé en ce que la tubulure (8), enfichée dans un perçage (9) de la partie supérieure de corps (2), est reliée à la partie supérieure de corps (2) au moyen d'une soudure à manchon.

5. Robinet à membrane selon la revendication 3, caractérisé en ce que la tubulure (8) est reliée par sa face frontale à la partie supérieure de corps (2) au moyen d'une liaison soudée bout-à-bout.

6. Robinet à membrane selon la revendication 1 ou 2, caractérisé en ce que la tubulure (8) est reliée rigidement à la partie supérieure de corps (2) par une fabrication en monobloc par un procédé de moulage par injection.

7. Robinet à membrane selon l'une des revendications 1 à 6, caractérisé en ce que la partie inférieure de corps (1) est susceptible d'être reliée rigidement à la tuyauterie (12) destinée au fluide traversant, par des manchons à soudage électriques (13).

8. Robinet à membrane selon l'une des revendications 1 à 7, caractérisé en ce que la tubulure (8) de la partie supérieure de corps (2) est susceptible d'être reliée rigidement à un tube d'amenée destiné au fluide sous pression, au moyen d'un manchon à soudure électrique (11).

9. Agencement du robinet à membrane selon l'une des revendications 1 à 8, caractérisé en ce que, en partant d'un robinet à membrane (20) disposé sous le niveau du sol, un tube d'amenée (10) destiné au fluide sous pression est posé jusqu'au niveau du sol, et une bouteille d'air comprimé, pour la fermeture du robinet à membrane (20), étant susceptible d'être raccordée à son extrémité.
